# EUROPEAN PATENT SPECIFICATION

(11) **EP 3 212 952 B1**
(45) Date of publication and mention of the grant of the patent: **31.07.2019**
(21) Application number: 15725436.8
(22) Date of filing: 17.04.2015
(51) Int. Cl.: F16D 13/75

(54) **SELF-ADJUSTING CLUTCH**
SELBSTANPASSENDE KUPPLUNG
EMBRAYAGE À COMPENSATION AUTOMATIQUE D'USURE

(30) Priority: 27.10.2014 TR 201412615
(43) Date of publication of application: 06.09.2017
(73) Proprietor: MA-PA Makina Parçalari Endüstrisi A.S., Çayirova/Kocaeli (TR)
(72) Inventor: YÜCESAN, Alisan, Kartal, Istanbul (TR)
(74) Representative: Cabinet Chaillot
(86) International application number: PCT/TR2015/000160
(87) International publication number: WO 2016/068817

(56) References cited:
- FR-A1- 2 750 467
- US-A- 5 069 322
- US-A- 6 029 787
- US-A1- 2003 141 163

## Description

The invention is related to the mechanism in the clutch pressure plate keeping both clutch pedal load and clutch clamp load constant.

Clutch pedal load and clutch clamp load change in case of wear in the clutch disc facings if the clutch pressure plate does not include an automated adjusting mechanism to keep the diaphragm spring working position stable.

Clutch pedal load gradually increases as long as the diaphragm spring working position varies due to the wear of the facings and may reach a load level troubling the driver comfort. In addition, the clutch clamp load changes over time owing to the same reason and clutch becomes unusable if the load decreases below the minimum clamp load value needed for engaging.

U.S. 6,029,787 discloses a self-adjusting clutch comprising a self-adjusting mechanism for a clutch pressure plate according to the preamble of claim 1. FR 2 750 467 A1 and US 2003/141163 A1 disclose other examples of friction clutches with an automatic wear compensation mechanism.

Thanks to the invention, the clutch clamp load value is kept constant without being linked with the amount of facings' wear. Additionally, the driver comfort is ensured by the invention as the clutch pedal load remains constant even if facings continue to wear. The invention compensates facings' wear therefore clutch pressure plate also has a longer lifetime with same characteristics.

The invention has a self-adjusting mechanism in the clutch pressure plate (1) as defined in claim 1. The facings of the clutch disc are worn over the time on account of engaging process and consequently their thicknesses decrease. Pressure plate moves with the same amount of total decrement in thickness towards to clutch disc. This displacement of pressure plate alters the working position of diaphragm spring (7) which leads to change the clutch clamp load and clutch pedal load. The invented mechanism compensates the relevant value of the facings' wear to keep the diaphragm spring (7) to maintain its initial working position.

Having a rotational kinetic energy to compel the plates to move via their screw thread is the key principle for the invention. The rotations transmitted from engine crankshaft to flywheel load the rotational kinetic energy to the wear compensation plate (2) and wear sensor adjusting plate (3) to move via their screw threads (12), (13) in order to make wear compensation by the amount the wear sensor (4) detects. The mechanism works as mentioned below;
A. The wear sensor (4) is mounted on the pressure plate (1) from its mounting surface and in contact with wear compensation plate (2), wear sensor adjusting plate (3) and clutch cover lug (11) from its contact surface. If the thickness of facing decreases, the pressure plate moves towards the clutch disc. The wear sensor (4) also moves with the pressure plate (1) while its contact surface keeps in contact with the clutch cover (8) lug (11), the distance (14) between wear sensor contact surface and its mounting surface increases as much as the total decrement in facing's thickness. This movement creates a gap, equal to the total decrement in the facing thickness, among the wear sensor contact surface and, both wear compensation plate (2) and wear sensor adjusting plate (3).
B. In this new position, wear sensor adjusting plate (3) can start to relatively rotate by its kinetic energy depending on the change in engine speed and it moves up by relatively rotating around the pressure plate (1) via its screw thread (12) until re-setting contact again with the wear sensor surface (15) to stop relative rotation. With this re-contact, wear sensor (4) is adjusted in the new-distance (14) position. The rollers (5) provide one way rotation for wear sensor adjusting plate (3) by preventing the movement in the opposite direction. Wear compensation plate (2) maintains its initial position while being under diaphragm spring (7) force.
C. When the diaphragm spring (7) is moved by clutch bearing for the disengagement process, the force applied by the diaphragm spring (7) on the wear compensation plate (2) begins to fade away and the wear compensation plate (2) starts to relatively rotate by its kinetic energy depending on the change in engine speed and it moves up by relatively rotating around the pressure plate (1) via its screw thread (13) until re-setting contact again with the wear sensor surface to stop relative rotation. With this re-contact, wear compensation plate (2) compensates the total decrement in the thickness of clutch disc's facings. The rollers (5) provide one way rotation for wear compensation plate (2) by preventing the movement in the opposite direction. The diaphragm spring is adjusted to its initial working position and the compensation-adjusting process is completed by the end of this movement.

### Explanations of Figures

- Figure (1): Self-Adjusting Clutch Section-1
- Figure (2): Self-Adjusting Clutch Section -2
- Figure (3): Self-Adjusting Clutch Section -3

- Figure (4): Pressure Plate
- Figure (5): Wear Compensation Plate
- Figure (6): Wear Sensor Adjusting Plate
- Figure (7): Wear Sensor
- Figure (8): Pressure Plate with Self-Adjusting Mechanism-1
- Figure (9): Pressure Plate with Self-Adjusting Mechanism-2

### Index Explanations Indicated in Figures

- (1): Pressure Plate
- (2): Wear Compensation Plate
- (3): Wear Sensor Adjusting Plate
- (4): Wear Sensor
- (5): Adjustment Roller
- (6): Mechanism Cover
- (7): Diaphragm Spring
- (8): Clutch Cover
- (9): Strap
- (10): Disc Spring
- (11): Clutch Cover Lug
- (12): Screw Thread-1
- (13): Screw Thread-2
- (14): Wear Sensor Adjusting Distance

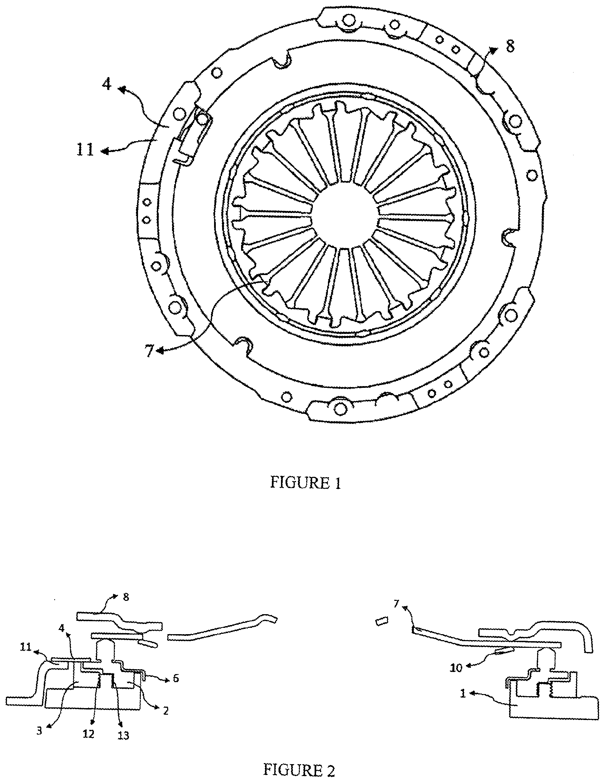

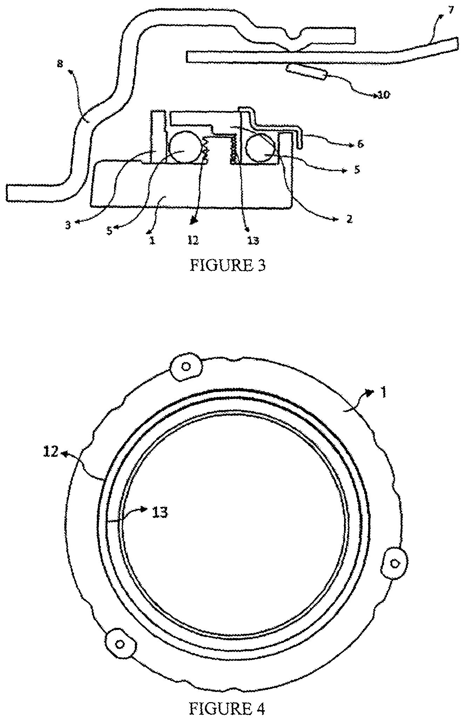

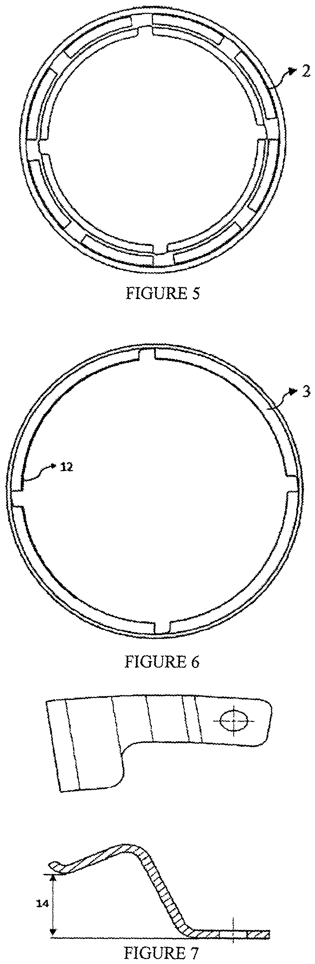

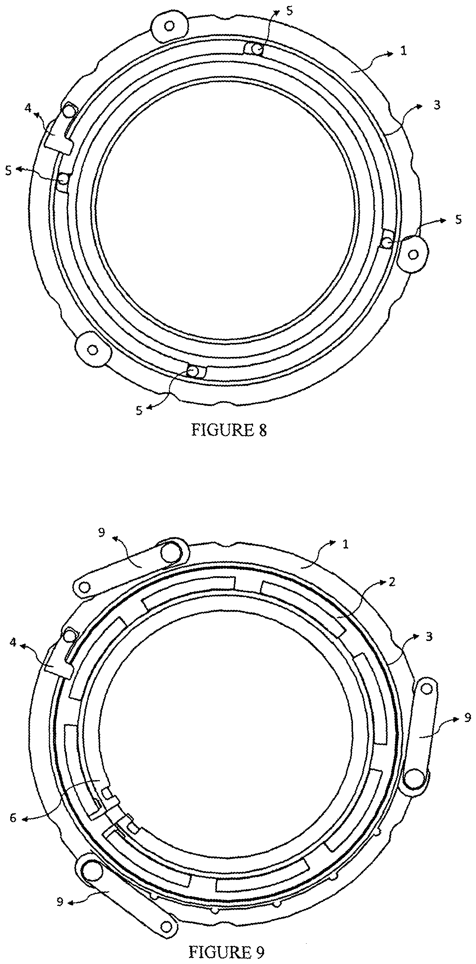

## Claims

1. A self-adjusting clutch comprising a self-adjusting mechanism for a clutch pressure plate, having a pressure plate (1), a wear compensation plate (2), a wear sensor adjusting plate (3), a wear sensor (4), a mechanism cover (6), a diaphragm spring (7), a clutch cover (8), a strap (9), a disc spring/fulcrum ring (10), a clutch cover lug (11), a first screw thread (12) and a second screw thread (13), **characterized in that** the self-adjusting mechanism comprises adjustment rollers (5) and **in that** the wear sensor (4) is mounted on the pressure plate (1) from its pressure plate mounting surface and in contact with wear compensation plate (2), wear sensor adjusting plate (3) and clutch cover (8) from its contact surface, whereby the wear sensor (4) moves with the pressure plate (1) and the adjusting distance (14) between wear sensor contact surface and its mounting surface increases as much as the total decrement in facing's thickness, **in that** the wear sensor adjusting plate (3) is relatively rotatable by its kinetic energy depending on the change in engine speed so as to move up by relatively rotating around the pressure plate (1) via its first screw thread (12) until re-setting contact again with the wear sensor surface to stop relative rotation, and **in that** the wear compensation plate (2) is relatively rotatable by its kinetic energy depending on the change in engine speed so as to move up by relatively rotating around the pressure plate (1) via its second screw thread (13) until re-setting contact again with the wear sensor (4) surface to stop relative rotation.

2. The self-adjusting clutch according to claim 1, **characterized in that** the rollers (5) provide one way rotation for wear sensor adjusting plate (3) by preventing the movement in the opposite direction.

3. The self-adjusting clutch according to any one of claims 1 and 2, **characterized in that** the wear compensation plate (2) maintains its initial position with the rollers (5) and diaphragm spring (7) force.

4. The self-adjusting clutch according to any one of claims 1 to 3, **characterized by** fading the diaphragm spring force on the wear compensation plate (2) as a result of the force applied on the diaphragm spring (7) by clutch bearing.

5. The self-adjusting clutch according to claim 1, **characterized in that** the rollers (5) provide one way rotation for wear compensation plate (2) by preventing the movement in the opposite direction.

## Patentansprüche

1. Selbstnachstellende Kupplung, umfassend einen Selbstnachstellungsmechanismus für eine Kupplungsdruckplatte mit einer Druckplatte (1), einer Verschleißausgleichsplatte (2), einer Verstellplatte (3) eines Verschleißsensors, einem Verschleißsensor (4), einem Deckel (6) des Mechanismus, einer Membranfeder (7), einem Kupplungsdeckel (8), einem Riemen (9), einer Tellerfeder/einem Drehpunktring (10), einer Öse (11) des Kupplungsdeckels, einem ersten Schraubgewinde (12) und einem zweiten Schraubgewinde (13),
**dadurch gekennzeichnet, dass** der Selbstnachstellungsmechanismus Verstellwalzen (5) umfasst und dass der Verschleißsensor (4) von dessen Druckplattenmontagefläche her auf der Druckplatte (1) montiert ist und von dessen Kontaktfläche her mit der Verschleißausgleichsplatte (2), der Verstellplatte (3) und dem Kupplungsdeckel (8) im Kontakt steht, wodurch sich der Verschleißsensor (4) mit der Druckplatte (1) bewegt und der Verstellungsabstand (14) zwischen der Kontaktfläche des Verschleißsensors und dessen Montagefläche in gleichem Maße zunimmt wie Dicke der Oberfläche abnimmt,
dass die Verstellplatte (3) durch deren kinetische Energie relativ rotierbar ist in Abhängigkeit von der Veränderung der Motorgeschwindigkeit, um sich durch relatives Rotieren um die Druckplatte (1) durch deren erstes Schraubgewinde (12) solange nach oben zu bewegen, bis sie wieder mit der Oberfläche des Verschleißsensors in Berührung kommt, um die relative Rotation zu stoppen, und
dass die Verschleißausgleichsplatte (2) durch deren kinetische Energie relativ rotierbar ist in Abhängigkeit von der Veränderung der Motorgeschwindigkeit, um sich durch relatives Rotieren um die Druckplatte (1) durch deren zwetes Schraubgewinde (13) solange nach oben zu bewegen, bis sie wieder mit der Oberfläche des Verschleißsensors (4) in Berührung kommt, um die relative Rotation zu stoppen.

2. Kupplung nach Anspruch 1, **dadurch gekennzeichnet, dass** die Walzen (5) eine Rotation der Verstellplatte (3) in einer Richtung dadurch gewährleisten, dass sie Bewegungen in der entgegengesetzten Richtung verhindern.

3. Kupplung nach einem der Ansprüche 1 und 2, **dadurch gekennzeichnet, dass** die Verschleißausgleichsplatte (2) ihre Ausgangslage mit der Kraft der Walzen (5) und der Membranfeder (7) beibehält.

4. Kupplung nach einem der Ansprüche 1 - 3, **dadurch gekennzeichnet, dass** die Membranfederkraft auf die Veschleißausgleichsplatte (2) infolge der von der Kupplungslagerung auf die Membranfeder (7) angewendeten Kraft abnimmt.

5. Kupplung nach Anspruch 1, **dadurch gekennzeichnet, dass** die Walzen (5) eine Rotation der Verschleißausgleichsplatte (2) in einer Richtung dadurch gewährleisten, dass sie Bewegungen in der entgegengesetzten Richtung verhindern.

## Revendications

1. Embrayage à compensation automatique d'usure comprenant un mécanisme de compensation automatique d'usure pour un plateau de pression d'embrayage, ayant un plateau de pression (1), une plaque de compensation d'usure (2), une plaque de réglage de capteur d'usure (3), un capteur d'usure (4), un couvercle de mécanisme (6), un ressort diaphragme (7), un couvercle d'embrayage (8), une attache (9), un disque ressort/anneau d'appui (10), un tenon de couvercle d'embrayage (11), un premier filetage (12) et un second filetage (13),
**caractérisé par le fait que** le mécanisme de compensation automatique d'usure comprend des rouleaux de réglage (5) et **par le fait que** le capteur d'usure (4) est monté sur le plateau de pression (1) à partir de sa surface de montage de plateau de pression et en contact avec la plaque de compensation d'usure (2), la plaque de réglage de capteur d'usure (3) et le couvercle d'embrayage (8) à partir de sa surface de contact, ce par quoi le capteur d'usure (4) se déplace avec le plateau de pression (1) et la distance de réglage (14) entre la surface de contact de capteur d'usure et sa surface de montage augmente autant que la diminution totale de l'épaisseur de la garniture,
**par le fait que** la plaque de réglage de capteur d'usure (3) est apte à tourner relativement par son énergie cinétique selon le changement de vitesse de moteur de façon à se déplacer vers le haut par rotation relative autour du plateau de pression (1) par l'intermédiaire de son premier filetage (12) jusqu'au rétablissement du contact avec la surface de capteur d'usure pour arrêter la rotation relative, et
**par le fait que** la plaque de compensation d'usure (2) est apte à tourner relativement par son énergie cinétique selon le changement de vitesse de moteur de façon à se déplacer vers le haut par rotation relative autour du plateau de pression (1) par l'intermédiaire de son second filetage (13) jusqu'au rétablissement du contact avec la surface de capteur d'usure (4) pour arrêter la rotation relative.

2. Embrayage à compensation automatique d'usure selon la revendication 1, **caractérisé par le fait que** les rouleaux (5) autorisent une rotation unidirectionnelle pour la plaque de réglage de capteur d'usure (3) en empêchant le mouvement dans le sens opposé.

3. Embrayage à compensation automatique d'usure selon l'une quelconque des revendications 1 et 2, **caractérisé par le fait que** la plaque de compensation d'usure (2) maintient sa position initiale avec la force des rouleaux (5) et du ressort diaphragme (7).

4. Embrayage à compensation automatique d'usure selon l'une quelconque des revendications 1 à 3, **caractérisé par** l'affaiblissement de la force du ressort diaphragme sur la plaque de compensation d'usure (2) en conséquence de la force appliquée sur le ressort diaphragme (7) par palier d'embrayage.

5. Embrayage à compensation automatique d'usure selon la revendication 1, **caractérisé par le fait que** les rouleaux (5) autorisent une rotation unidirectionnelle pour la plaque de compensation d'usure (2) en empêchant le mouvement dans le sens opposé.
